# EUROPÄISCHE PATENTSCHRIFT

(11) **EP 1 559 164 B1**
(45) Veröffentlichungstag und Bekanntmachung des Hinweises auf die Patenterteilung: **17.07.2013**
(21) Anmeldenummer: 03775168.2
(22) Anmeldetag: 02.10.2003
(51) Int. Cl.: H01M 8/10, B01D 67/00, C08J 5/22

(54) **PROTONENLEITENDE POLYMERMEMBRAN ENTHALTEND POLYAZOLBLENDS UND DEREN ANWENDUNG IN BRENNSTOFFZELLEN**
PROTON-CONDUCTING POLYMER MEMBRANE CONTAINING POLYAZOLE BLENDS, AND APPLICATION THEREOF IN FUEL CELLS
MEMBRANE POLYMERE CONDUCTRICE DE PROTONS CONTENANT DES MELANGES DE POLYAZOLES, ET SON UTILISATION DANS DES PILES A COMBUSTIBLE

(30) Priorität: 04.10.2002 DE 10246461
(43) Veröffentlichungstag der Anmeldung: 03.08.2005
(73) Patentinhaber: BASF Fuel Cell Research GmbH, 67056 Ludwigshafen (DE)
(72) Erfinder: UENSAL, Oemer, 55128 Mainz (DE); KIEFER, Joachim, 66679 Losheim am See (DE); CALUNDANN, Gordon, North Plainfield, NJ 07060 (US); SANSONE, Michael, Berkeley Heights, NJ 07927 (US); BENICEWICZ, Brian, Loudonville, NY 12211 (US); CHOE, Eui, Won, Randolph, NJ 07869 (US)
(74) Vertreter: Mai, Dörr, Besier
(86) Internationale Anmeldenummer: PCT/EP2003/010905
(87) Internationale Veröffentlichungsnummer: WO 2004/034500

(56) Entgegenhaltungen:
- EP-A- 0 354 040
- WO-A-00/27513
- WO-A-01/94450
- WO-A-02/36249
- WO-A2-01/18894
- US-A- 5 098 985
- US-B1- 6 248 469

## Beschreibung

Die vorliegende Erfindung betrifft eine Protonenleitende Polymerelektrolytmembran umfassend Polyazolblends, die aufgrund ihrer hervorragenden chemischen und thermischen Eigenschaften vielfältig eingesetzt werden kann und sich insbesondere als Polymer-Elektrolyt-Membran (PEM) in sogenannten PEM-Brennstoffzellen eignet.

Eine Brennstoffzelle enthält üblicherweise einen Elektrolyten und zwei durch den Elektrolyten getrennte Elektroden. Im Fall einer Brennstoffzelle wird einer der beiden Elektroden ein Brennstoff, wie Wasserstoffgas oder ein Methanol-Wasser-Gemisch, und der anderen Elektrode ein Oxidationsmittel, wie Sauerstoffgas oder Luft, zugeführt und dadurch chemische Energie aus der Brennstoffoxidation direkt in elektrische Energie umgewandelt. Bei der Oxidationsreaktion werden Protonen und Elektronen gebildet.

Der Elektrolyt ist für Wasserstoffionen, d.h. Protonen, aber nicht für reaktive Brennstoffe wie das Wasserstoffgas oder Methanol und das Sauerstoffgas durchlässig.

Eine Brennstoffzelle weist in der Regel mehrere Einzelzellen sogenannte MEE's (Membran-Elektroden-Einheit) auf, die jeweils einen Elektrolyten und zwei durch den Elektrolyten getrennte Elektroden enthalten.

Als Elektrolyt für die Brennstoffzelle kommen Feststoffe wie Polymerelektrolytmembranen oder Flüssigkeiten wie Phosphorsäure zur Anwendung. In jüngster Zeit haben Polymerelektrolytmembranen als Elektrolyte für Brennstoffzellen Aufmerksamkeit erregt. Prinzipiell kann man zwischen 2 Kategorien von Polymermembranen unterscheiden.

Zu der ersten Kategorie gehören Kationenaustauschermembranen bestehend aus einem Polymergerüst welches kovalent gebunden Säuregruppen, bevorzugt Sulfonsäuregruppen enthält. Die Sulfonsäuregruppe geht unter Abgabe eines Wasserstoffions in ein Anion über und leitet daher Protonen. Die Beweglichkeit des Protons und damit die Protonenleitfähigkeit ist dabei direkt an den Wassergehalt verknüpft. Durch die sehr gute Mischbarkeit von Methanol und Wasser weisen solche Kationenaustauschermembranen eine hohe Methanolpermeabilität auf und sind deshalb für Anwendungen in einer Direkt-Methanol-Brennstoffzelle ungeeignet. Trocknet die Membran, z.B. in Folge hoher Temperatur, aus, so nimmt die Leitfähigkeit der Membran und folglich die Leistung der Brennstoffzelle drastisch ab. Die Betriebstemperaturen von Brennstoffzellen enthaltend solche Kationenaustauschermembranen ist somit auf die Siedetemperatur des Wassers beschränkt. Die Befeuchtung der Brennstoffe stellt eine grosse technische Herausforderung für den Einsatz von Polymerelektrolytmembranbrennstoffzellen (PEMBZ) dar, bei denen konventielle, sulfonierte Membranen wie z.B. Nafion verwendet werden.

So verwendet man als Materialien für Polymerelektrolytmembranen beispielsweise Perfluorsulfonsäurepolymere. Das Perfluorsulfonsäurepolymer (wie z.B. Nafion) weist im allgemeinen ein Perfluorkohlenwasserstoffgerüst auf, wie ein Copolymer aus Tetrafluorethylen und Trifluorvinyl, und eine daran gebundene Seitenkette mit einer Sulfonsäuregruppe, wie eine Seitenkette mit einer an eine Perfluoralkylengruppe gebundenen Sulfonsäuregruppe.

Bei den Kationenaustauschermembranen handelt es sich vorzugsweise um organische Polymere mit kovalent gebundenen Säuregruppen, insbesondere Sulfonsäure. Verfahren zur Sulfonierung von Polymeren sind in F. Kucera et. al. Polymer Engineering and Science1988, Vol. 38, No 5, 783-792 beschrieben.

Im Folgenden sind die wichtigsten Typen von Kationenaustauschmembranen aufgeführt die zum Einsatz in Brennstoffzellen kommerzielle Bedeutung erlangt haben:

Der wichtigste Vertreter ist das Perfluorosulfonsäurepolymer Nafion^{®} (US 3692569). Dieses Polymer kann wie in US 4453991 beschrieben in Lösung gebracht und dann als lonomer eingesetzt werden. Kationenaustauschermembranen werden auch erhalten durch Füllen eines porösen Trägermaterials mit einem solchen lonomer. Als Trägermaterial wird dabei expandiertes Teflon bevorzugt (US 5635041).

Eine weitere perfluorinierte Kationenaustauschermembran kann wie in US5422411 beschrieben durch Copolymerisation aus Trifluorostyrol und sulfonylmodifiziertem Trifuorostyrol hergestellt werden. Kompositmembranen bestehend aus einem porösen Trägermaterial, insbesondere expandiertes Teflon, gefüllt mit lonomeren bestehend aus solchen sulfonylmodifizierten Trifluorostyrol-Copolymeren sind in US5834523 beschrieben. US6110616 beschreibt Copolymere aus Butadien und Styrol und deren anschliesende Sulfonierung zur Herstellung von Kationenaustauschermembranen für Brennstoffzellen.

Eine weitere Klasse von teilfluorierten Kationenaustauschermembranen kann durch Strahlenpfropfen und nachfolgende Sulfonierung hergestellt werden. Dabei wird wie in EP667983 oder DE19844645 beschrieben an einem zuvor bestrahlten Polymerfilm eine Pfropfungsreaktion vorzugsweise mit Styrol durchgeführt. In einer nachfolgenden Sulfonierungsreaktion erfolgt dann die Sulfonierung der Seitenketten. Gleichzeitig mit der Pfropfung kann auch eine Vernetzung durchgeführt und somit die mechanischen Eigenschaften verändert werden.

Neben obigen Membranen wurde eine weitere Klasse nichtfluorierter Membranen durch Sulfonierung von hochtemperaturstabilen Thermoplasten entwickelt. So sind Membranen aus sulfonierten Polyetherketonen (DE4219077, EP96/01177), sulfoniertem Polysulfon (J. Membr. Sci. 83 (1993) p.211) oder sulfoniertem Polyphenylensulfid (DE19527435) bekannt. lonomere hergestellt aus sulfonierten Polyetherketonen sind in WO 00/15691 beschrieben.

Desweiteren sind Säure-Base-Blendmembranen bekannt, die wie in DE19817374 oder WO 01/18894 beschrieben durch Mischungen von sulfonierten Polymeren und basischen Polymeren hergestellt werden.

Zur weiteren Verbesserung der Membraneigenschaften kann eine aus dem Stand der Technik bekannte Kationenaustauschermembran mit einem hochtemperaturstabilen Polymer gemischt werden. Die Herstellung und Eigenschaften von Kationenaustauschermembranen bestehend aus Blends aus sulfoniertem PEK und a) Polysulfonen (DE4422158), b) aromatischen Polyamiden (EP0 604 881) oder c) Polybenzimidazol (DE19851498) sind beschrieben.

Problematisch an derartigen Membranen ist jedoch deren aufwendige und somit teure Herstellung, da üblich zunächst verschiedene Polymere gebildet werden, welche anschließend häufig mit Hilfe eines Lösungsmittels zu einer Folie gegossen werden. Zur Darstellung der sulfonierten Polymere wird üblicherweise das PEK in einem geeigneten Lösungsmittel gelöst und anschließend mit einem aggressiven Sulfonierungsreagenz, beispielsweise Oleum oder Chlorsulfonsäure, umgesetzt. Diese Reaktion ist relativ kritisch, da das Sulfonierungsreagenz ein starkes Oxidationsmittel darstellt, so dass ein Abbau des PEK nicht ausgeschlossen werden kann, wobei insbesondere die mechanischen Eigenschaften des Polymers nachteilig beeinflußt werden. Das sulfonierte Polymer wird in einem weiteren Prozeßschritt isoliert und in die neutrale Form überführt. Danach wird das Polymer wieder in Lösung gebracht. Aus dieser Lösung kann unter anderem ein Polymerfilm gegossen werden. Das hierzu verwendete Lösungsmittel, beispielsweise N-Dimethylacetamid muß anschließend entfernt werden. Dementsprechend ist das Verfahren zur Herstellung derartiger Membranen aufwendig und somit teuer.

Bei diesen Sulfonierungsverfahren unter dem Einsatz sehr starker Sulfonierungsagenzien findet eine unkontrollierte Sulfonierung an einer Vielzahl an Stellen des Polymers statt. Die Sulfonierung kann auch zu Kettenbruch und somit zu einer Verschlechterung der mechanischen Eigenschaften und schliesslich zum vorzeitigen Versagen der Brenstoffzelle führen.

Auch sulfonierte Polybenzimidazole sind bereits aus der Literatur bekannt.

So beschreibt US-A-4634530) eine Sulfonierung einer undotierten Polybenzimidazol-Folie mit einem Sulfonierungsmittel wie Schwefelsäure oder Oleum im Temperaturbereich bis 100°C.

Des weiteren haben Staiti et al (P. Staiti in J. Membr. Sci. 188 (2001) 71) die Herstellung und Eigenschaften von sulfoniertem Polybenzimidazole beschrieben. Dazu war es nicht möglich die Sulfonierung an dem Polymer in der Lösung vorzunehmen. Bei Zugabe des Sulfonierungsmittels zu der PBI/DMAc Lösung fällt das Polymer aus. Zur Sulfonierung wurde zunächst ein PBI-Film hergestellt und dieser in eine verdünnte Schwefelsäure getaucht. Zur Sulfonierung wurden die Proben dann bei Temperaturen von ca. 475°C während 2 Minuten behandelt. Die sulfonierten PBI Membranen besitzen nur eine maximale Leitfähigkeit von 7,5*10⁻⁵ S/cm bei einer Temperatur von 160°C. Die maximale Ionenaustauschkapazität beträgt 0,12 meq/g: Es wurde ebenfalls gezeigt, dass solchermassen sulfonierte PBI Membranen nicht für den Einsatz in einer Brennstoffzelle geeignet sind.

Die Herstellung von sulfoalkylierten PBI Membranen durch die Umsetzung eines hydroxyethyl-modifizierten PBI mit einem Sulton ist in US-A-4997892 beschrieben. Basierend auf dieser Technologie können sulfopropylierte PBI Membranen hergestelltten werden (Sanui et al in Polym. Adv. Techn. 11 (2000) 544). Die Protonenleitfähigkeit solcher Membranen liegt bei 10⁻³ S/Cm und ist somit für Anwendungen in Brennstoffzellen, bei denen 0,1 S/cm angestrebt sind, zu niedrig.

Nachteil all dieser Kationenaustauschermembranen ist die Tatsache, dass die Membran befeuchtet werden muss, die Betriebstemperatur auf 100°C beschränkt ist, und die Membranen eine hohe Methanolpermeabilität aufweisen. Ursache für diese Nachteile ist der Leitfähigkeitsmechanismus der Membran, bei der der Transport der Protonen an den Transport des Wassermoleküls gekoppelt ist. Dies bezeichnet man als "Vehicle-Mechanismus" (K.-D. Kreuer, Chem. Mater. 1996, 8, 610-641).

Als zweite Kategorie sind Polymerelektrolytmembranen mit Komplexen aus basischen Polymeren und starken Säuren entwickelt worden. So beschreibt WO96/13872 und die korrespondierende US-PS 5,525,436 ein Verfahren zur Herstellung einer protonenleitenden Polymerelektrolytmembranen, bei dem ein basisches Polymer, wie Polybenzimidazol, mit einer starken Säure, wie Phosphorsäure, Schwefelsäure usw., behandelt wird.

In J. Electrochem. Soc., Band 142, Nr. 7, 1995, S. L121-L123 wird die Dotierung eines Polybenzimidazols in Phosphorsäure beschrieben.

Bei den im Stand der Technik bekannten basischen Polymermembranen wird die - zum Erzielen der erforderlichen Protonenleitfähigkeit - eingesetzte Mineralsäure (meist konzentrierte Phosphorsäure) üblicherweise nach der Formgebung der Polyazolfolie beigefügt. Das Polymer dient dabei als Träger für den Elektrolyten bestehend aus der hochkonzentrierten Phosphorsäure. Die Polymermembran erfüllt dabei weitere wesentliche Funktionen insbesondere muss sie eine hohe mechanische Stabilität aufweisen und als Separator für die beiden eingangs genannten Brennstoffe dienen.

Aus WO 01/18894 sind Membranen auf Basis von Polybenzimidazolen sowie Blendmembranen auf Basis von Polybenzimidazolen und einem weiteren Polymer bekannt. Diese werden aus organischen Lösungen hergestellt und nachträglich mit Phosphorsäure dotiert.

Wesentliche Vorteile einer solchen Phosphorsäure dotierten Membran ist die Tatsache, dass eine Brennstoffzelle, bei der eine derartige Polymerelektrolytmembran eingesetzt wird, bei Temperaturen oberhalb 100°C ohne eine sonst notwendige Befeuchtung der Brennstoffe betrieben werden kann. Dies liegt in der Eigenschaft der Phosphorsäure begründet die Protonen ohne zusätzliches Wasser mittels des sog. Grotthus Mechanismus transportieren zu können (K.-D. Kreuer, Chem. Mater. 1996, 8, 610-641).

Durch die Möglichkeit des Betriebes bei Temperaturen oberhalb 100°C ergeben sich weitere Vorteile für das Brennstoffzellensystem. Zum Einen wird die Empfindlichkeit des Pt-Katalysators gegenüber Gasverunreinigungen, insbesondere CO, stark verringert. CO entsteht als Nebenprodukt bei der Reformierung des wasserstoffreichen Gases aus Kohlenstoffhaltigen Verbindungen, wie z.B. Erdgas, Methanol oder Benzin oder auch als Zwischenprodukt bei der direkten Oxidation von Methanol. Typischerweise muss der CO-Gehalt des Brennstoffes bei Temperaturen <100°C kleiner als 100 ppm sein. Bei Temperaturen im Bereich 150-200° können jedoch auch 10000 ppm CO oder mehr toleriert werden (N. J. Bjerrum et. al. Journal of Applied Electrochemistry, 2001,31, 773-779). Dies führt zu wesentlichen Vereinfachungen des vorgeschalteten Reformierungsprozesses und somit zu Kostensenkungen des gesamten Brennstoffzellensystems.

Ein grosser Vorteil von Brennstoffzellen ist die Tatsache, dass bei der elektrochemischen Reaktion die Energie des Brennstoffes direkt in elektrische Energie und Wärme umgewandelt wird. Als Reakionsprodukt entsteht dabei an der Kathode Wasser. Als Nebenprodukt bei der elektrochemischen Reaktion entsteht also Wärme. Für Anwendungen bei denen nur der Strom zum Antrieb von Elektromotoren genutzt wird, wie z.B. für Automobilanwendungen, oder als vielfältiger Ersatz von Batteriesystemen muss die Wärme abgeführt werden, um ein Überhitzen des Systems zu vermeiden. Für die Kühlung werden dann zusätzliche, Energie verbrauchende Geräte notwendig, die den elektrischen Gesamt-Wirkungsgrad der Brennstoffzelle weiter verringern. Für stationäre Anwendungen wie zur zentralen oder dezentralen Erzeugung von Strom und Wärme lässt sich die Wärme effizient durch vorhandene Technologien wie z.B. Wärmetauscher nutzen. Zur Steigerung der Effizienz werden dabei hohe Temperaturen angestrebt. Liegt die Betriebstemperatur oberhalb 100°C und ist die Temperaturdifferenz zwischen der Umgebungstemperatur und der Betriebstemperatur groß, so wird es möglich das Brennstoffzellensystem effizienter zu kühlen beziehungsweise kleine Kühlflächen zu verwenden und auf zusätzliche Geräte zu verzichten im Vergleich zu Brennstoffzellen, die aufgrund der Membranbefeuchtung bei unter 100°C betrieben werden müssen.

Neben diesen Vorteilen weist ein solches Brennstoffzellensystem jedoch auch Nachteile auf. So ist die Haltbarkeit von Phosphorsäure dotierten Membranen relativ begrenzt. Hierbei wird die Lebensdauer insbesondere durch einen Betrieb der Brennstoffzelle unterhalb von 100°C, beispielsweise bei 80°C deutlich herabgesetzt. In diesem Zusammenhang ist jedoch festzuhalten, dass beim An- und Herunterfahren der Brennstoffzelle die Zelle bei diesen Temperaturen betrieben werden muss.

Des weiteren ist die Herstellung von Phosphorsäure dotierten Membranen relativ teuer, da üblich zunächst ein Polymer gebildet wird, welches anschließend mit Hilfe eines Lösungsmittels zu einer Folie gegossen wird. Nach der Trocknung der Folie wird diese in einem letzten Schritt mit einer Säure dotiert. So haben die bislang bekannten Polymermembranen einen hohen Gehalt an Dimethylacetamid (DMAc), der mittels bekannter Trocknungsmethoden nicht vollständig entfernt werden kann.

Darüber hinaus ist die Leistungsfähigkeit, beispielsweise die Leitfähigkeit von bekannten Membranen noch zu verbessern.

Weiterhin ist die mechanische Stabilität von bekannten Hochtemperaturmernbranen mit hoher Leitfähigkeit noch zu verbessern.

Der vorliegenden Erfindung liegt daher die Aufgabe zugrunde, eine neuartige Polymerelektrolytmembran bereitzustellen, die die zuvor dargelegten Aufgaben löst. Insbesondere soll eine erfindungsgemäße Membran kostengünstig und einfach hergestellt werden können. Darüber hinaus war es mithin Aufgabe der vorliegenden Erfindung Polymerelektrolytmembranen zu schaffen, die eine hohe Leistungsfähigkeit, insbesondere eine hohe Leitfähigkeit über einen weiten Temperaturbereich zeigen. Hierbei sollte die Leitfähigkeit, insbesondere bei hohen Temperaturen ohne eine zusätzliche Befeuchtung erzielt werden. Hierbei soll die Membran eine, in Relation zur ihrer Leistungsfähigkeit, hohe mechanische Stabilität aufweisen.

Des weiteren soll die Betriebstemperatur von <80°C bis auf 200°C ausgeweitet werden können, ohne dass die Lebensdauer der Brennstoffzelle sehr stark herabgesetzt werden würde.

Gelöst werden diese Aufgaben durch eine protonenleitende Polymermembran umfassend Polyazolblends mit allen Merkmalen des Anspruchs 1.

Eine erfindungsgemäße Membran zeigt über einen großen Temperaturbereich eine hohe Leitfähigkeit, die auch ohne eine zusätzliche Befeuchtung erzielt wird. Hierbei zeigt eine erfindungsgemäße Membran eine relativ hohe mechanische Stabilität.

Des weiteren kann eine erfindungsgemäße Membran einfach und kostengünstig hergestellt werden. So kann insbesondere auf große Mengen an teuren Lösungsmitteln, wie Dimethylacetamid verzichtet werden.

Des weiteren zeigen diese Membranen eine überraschend lange Lebensdauer. Des weiteren kann eine Brennstoffzelle, die mit einer erfindungsgemäßen Membran ausgestattet ist, auch bei tiefen Temperaturen, beispielsweise bei 80°C betrieben werden, ohne dass hierdurch die Lebensdauer der Brennstoffzelle sehr stark herabgesetzt wird.

Gegenstand der vorliegenden Erfindung ist eine protonenleitende Polymermembran enthaltend Polyazolblends erhältlich durch ein Verfahren umfassend die Schritte
A) Herstellung einer Mischung umfassend
   Polyphosphorsäure,
   mindestens ein Polyazol (Polymer A) und/oder mindestens ein oder mehrere
   Verbindungen, die unter Einwirkung von Wärme gemäß Schritt B) zur Bildung von Polyazolen geeignet sind,
B) Erwärmen der Mischung erhältlich gemäß Schritt A) unter Inertgas auf Temperaturen von bis zu 400°C,
C) Aufbringen einer Schicht unter Verwendung der Mischung gemäß Schritt A) und/oder B) auf einem Träger,
D) partielle Hydrolyse der Polyphosphorsäure die in der gemäß Schritt C) gebildeten Membran vorliegt durch Gegenwart von Feuchtigkeit bei Temperaturen und für eine Dauer ausreichend bis diese selbsttragend ist, wobei der gemäß Schritt A) und/oder Schritt B) erhältlichen Zusammensetzung mindestens ein weiteres Polymer (Polymer B), das kein Polyazol darstellt, zugefügt wird, wobei das Gewichtsverhältnis von Polyazol zu Polymer B im Bereich von 0,1 bis 50 liegt und die Polymermembran eine Protonenleitfähigkeit von mindestens 0,1 S/cm bei 120°C aufweist.

Die gemäß Schritt B) hergestellte Zusammensetzung umfasst Polyazole. Diese Polymere können bereits in Schritt A) zugegeben werden. Des weiteren können diese Polymere auch aus dem Polymer zugrundeliegenden Monomeren, Oligomeren und/oder Vorpolymeren während dem Erwärmen gemäß Schritt B) erhalten werden.

Polymere auf Basis von Polyazol enthalten wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII) 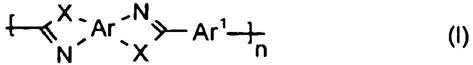 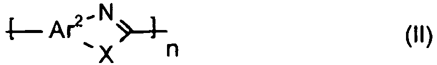 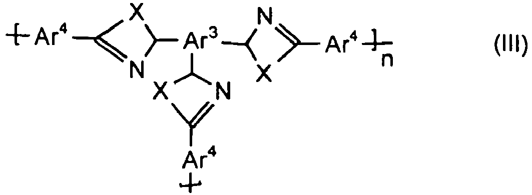 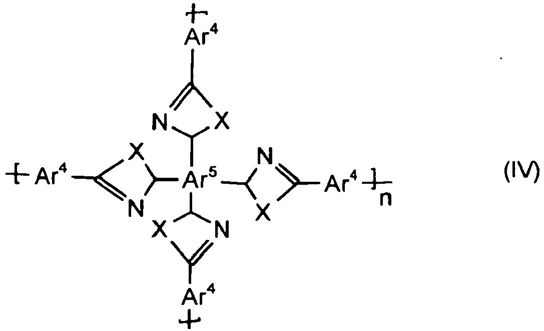 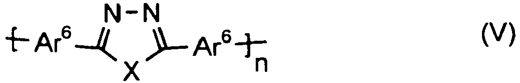 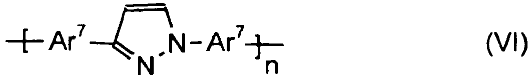 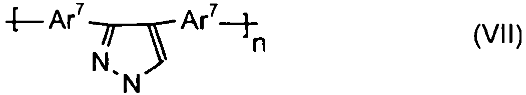 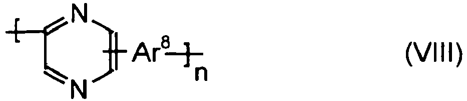 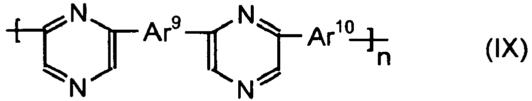 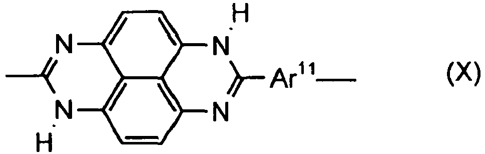 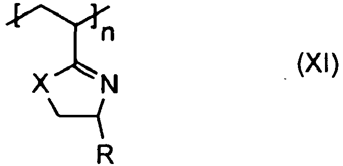 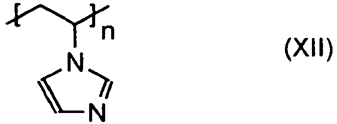 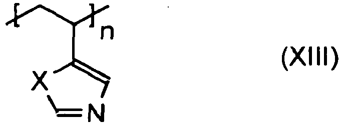 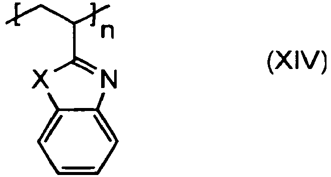 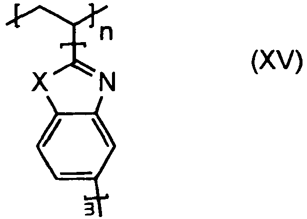 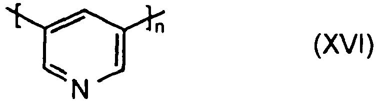 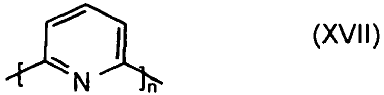 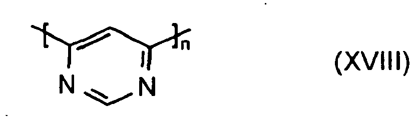 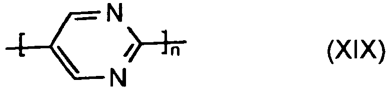 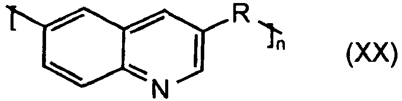 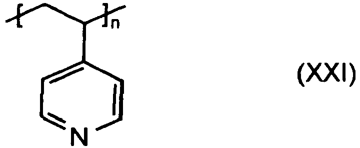 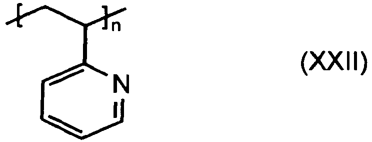 worin
- Ar: gleich oder verschieden sind und für eine vierbindige aromatische oder heteroaromatische Gruppe, die ein- oder mehrkernig sein kann,
- Ar¹: gleich oder verschieden sind und für eine zweibindige aromatische oder heteroaromatische Gruppe, die ein- oder mehrkernig sein kann,
- Ar²: gleich oder verschieden sind und für eine zwei oder dreibindige aromatische oder heteroaromatische Gruppe, die ein- oder mehrkernig sein kann,
- Ar³: gleich oder verschieden sind und für eine dreibindige aromatische oder heteroaromatische Gruppe, die ein- oder mehrkernig sein kann,
- Ar⁴: gleich oder verschieden sind und für eine dreibindige aromatische oder heteroaromatische Gruppe, die ein- oder mehrkernig sein kann,
- Ar⁵: gleich oder verschieden sind und für eine vierbindige aromatische oder heteroaromatische Gruppe, die ein- oder mehrkernig sein kann,
- Ar⁶: gleich oder verschieden sind und für eine zweibindige aromatische oder heteroaromatische Gruppe, die ein- oder mehrkernig sein kann,
- Ar⁷: gleich oder verschieden sind und für eine zweibindige aromatische oder heteroaromatische Gruppe, die ein- oder mehrkernig sein kann,
- Ar⁸: gleich oder verschieden sind und für eine dreibindige aromatische oder heteroaromatische Gruppe, die ein- oder mehrkernig sein kann,
- Ar⁹: gleich oder verschieden sind und für eine zwei- oder drei- oder vierbindige aromatische oder heteroaromatische Gruppe, die ein- oder mehrkernig sein kann,
- Ar¹⁰: gleich oder verschieden sind und für eine zwei- oder dreibindige aromatische oder heteroaromatische Gruppe, die ein- oder mehrkernig sein kann,
- Ar¹¹: gleich oder verschieden sind und für eine zweibindige aromatische oder heteroaromatische Gruppe, die ein- oder mehrkernig sein kann,
- X: gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: gleich oder verschieden für Wasserstoff, eine Alkylgruppe und eine aromatische Gruppe steht und
- n, m: eine ganze Zahl größer gleich 10, bevorzugt größer gleich 100 ist.

Erfindungsgemäß bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷ , Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben: 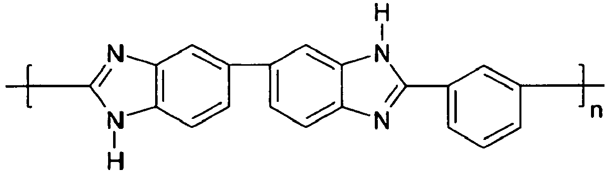 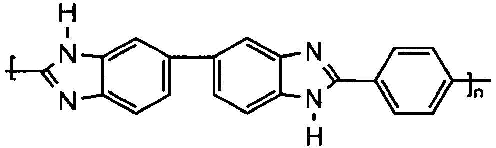 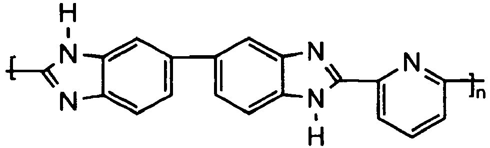 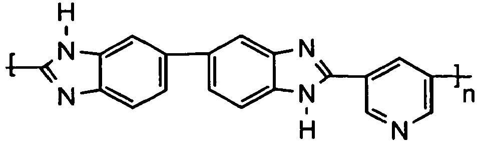 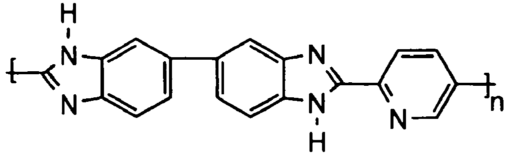 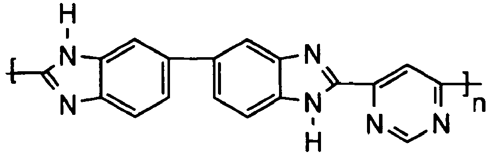 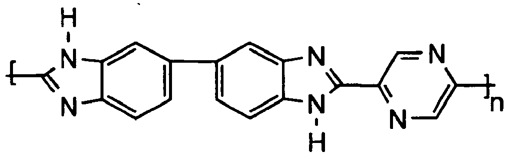 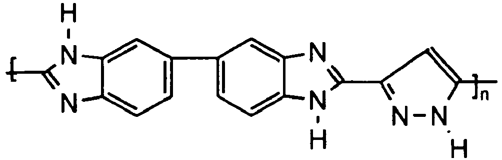 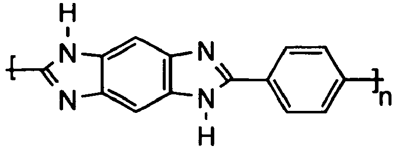 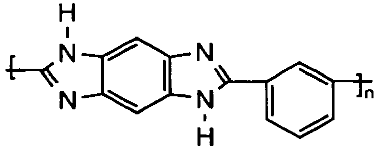 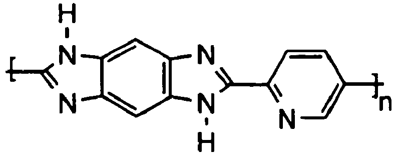 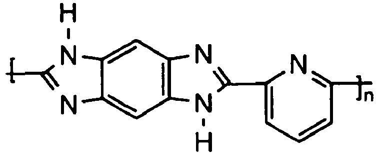 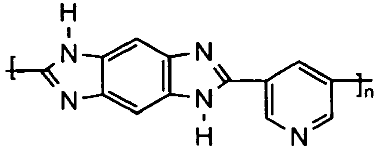 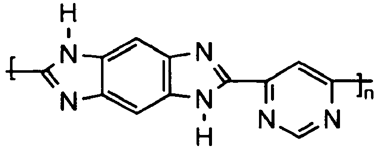 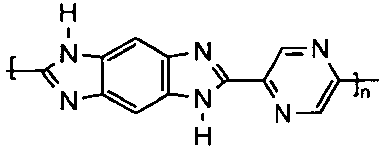 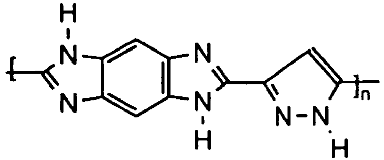 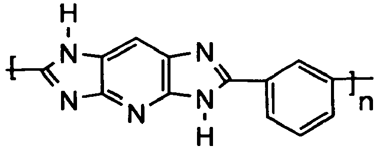 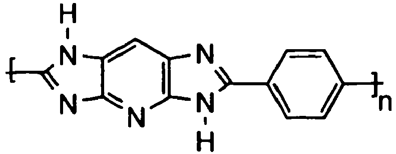 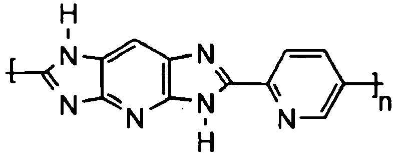 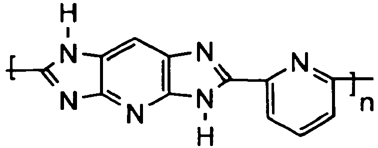 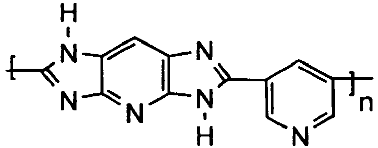 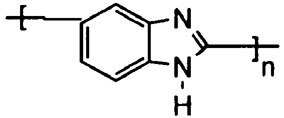 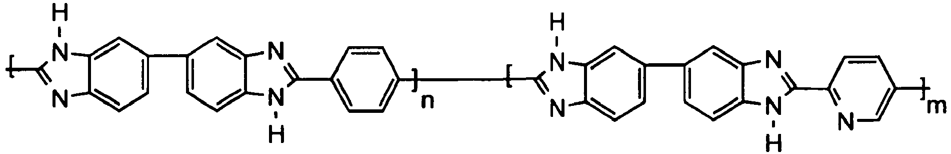 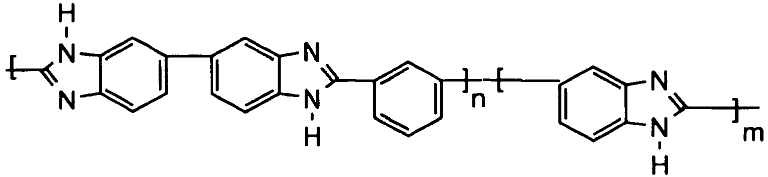 wobei n und m eine ganze Zahl größer gleich 10, vorzugsweise größer gleich 100 ist.

Die in Schritt A) eingesetzten Polyazole, inbesondere jedoch die Polybenzimidazole zeichnen sich durch ein hohes Molekulargewicht aus. Gemessen als Intrinsische Viskosität liegt diese vorzugsweise im Bereich von 0,3 bis 10 dl/g, insbesondere 1 bis 5 dl/g.

Des weiteren können die Polyazole auch in Schritt B) durch Erwärmen hergestellt werden. Hierzu können der Mischung gemäß Schritt A) ein oder mehrere Verbindungen beigefügt werden, die unter Einwirkung von Wärme gemäß Schritt B) zur Bildung von Polyazolen geeignet sind.

Hierzu sind Mischungen geeignet, die ein oder mehreren aromatische und/oder heteroaromatische Tetra-Amino-Verbindungen und eine oder mehrere aromatische und/oder heteroaromatische Carbonsäuren oder deren Derivate, die mindestens zwei Säuregruppen pro Carbonsäure-Monomer umfassen. Des weiteren können ein oder mehrere aromatische und/oder heteroaromatische Diaminocarbonsäuren zur Herstellung von Polyazolen eingesetzt werden.

Zu den aromatischen und heteroaromatischen Tetra-Amino-Verbindungen gehören unter anderem 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan
sowie deren Salze, insbesondere deren Mono-, Di-, Tri- und Tetrahydrochloridderivate. Hiervon sind 3,3',4,4'-Tetraaminobiphenyl, 2,3,5,6-Tetraaminopyridin und 1,2,4,5-Tetraaminobenzol besonders bevorzugt.

Des weiteren kann die Mischung A) aromatische und/oder heteroaromatische Carbonsäuren umfassen. Hierbei handelt es sich um Dicarbonsäuren und Tricarbonsäuren und Tetracarbonsäuren bzw. deren Estern oder deren Anhydride oder deren Säurehalogenide, insbesondere deren Säurehalogenide und/oder Säurebromide. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,l,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-**4**,**4**'-dicarbonsäure, Benzophenon-**4**,**4**'-dicarbonsäure, Diphenylsulfon-**4**,**4**'-dicarbonsäure, Biphenyl-**4**,**4**'-dicarbonsäure, 4-Trifluoromethylphthalsäure, 2,2-Bis(4-carboxyphenyl)hexafluoropropan, **4**,**4**'-Stilbendicarbonsäure, **4**-Carboxyzimtsäure, bzw. deren C1-C20-Alkyl-Ester oder C5-C12-Aryl-Ester, oder deren Säureanhydride oder deren Säurechloride.

Bei den aromatischen Tricarbonsäuren bzw. deren C1-C20-Alkyl-Ester oder C5-C12-ArylEster oder deren Säureanhydride oder deren Säurechloride handelt es sich bevorzugt um 1,3,5-Benzol-tricarbonsäure (Trimesic acid), 1,2,4-Benzol-tricarbonsäure (Trimellitic acid), (2-Carboxyphenyl)iminodiessigsäure, 3,5,3'-Biphenyltricarbonsäure, 3,5,4'-Biphenyltricarbonsäure.

Bei den aromatischen Tetracarbonsäuren bzw. deren C1-C20-Alkyl-Ester oder C5-C12-ArylEster oder deren Säureanhydride oder deren Säurechloride handelt es sich bevorzugt um 3,5,3',5'-biphenyltetracarbonsäure, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure.

Bei den heteroaromatischen Carbonsäuren handelt es sich um heteroaromatischen Dicarbonsäuren und Tricarbonsäuren und Tetracarbonsäuren bzw. deren Estern oder deren Anhydride. Als heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure, 2,4,6-Pyridintricarbonsäure, Benzimidazol-5,6-dicarbonsäure. Sowie deren C1-C20-Alkyl-Ester oder C5-C12-Aryl-Ester, oder deren Säureanhydride oder deren Säurechloride.

Der Gehalt an Tricarbonsäure bzw. Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%.

Des weiteren kann die Mischung A) auch aromatische und heteroaromatische Diaminocarbonsäuren enthalten. Zu diesen gehört unter anderem Diaminobenzoesäure, 4-Phenoxycarbonyl-3,'4'-diaminodiphenylether und deren Mono- und Dihydrochloridderivate.

Bevorzugt werden in Schritt A) Mischungen von mindestens 2 verschiedenen aromatischen Carbonsäuren einzusetzen. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise 1:50 bis 50:1.

Bei diesen Mischungen handelt es sich insbesondere um Mischungen von N-heteroaromatischen Dicarbonsäuren und aromatischen Dicarbonsäuren. Nicht limitierende Beispiele für Dicarbonsäuren sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 - Pyrimidindicarbonsäure,2,5-Pyrazindicarbonsäure.

Soll ein möglichst hohes Molekulargewicht erzielt werden, so liegt das Molverhältnis von Carbonsäuregruppen zu Aminogruppen bei der Umsetzung von Tetra-Amino-Verbindungen mit einer oder mehreren aromatischen Carbonsäuren bzw. deren Estern, die mindestens zwei Säuregruppen pro Carbonsäure-Monomer enthalten, vorzugsweise in der Nähe von 1:2.

Die in Schritt A) hergestellte Mischung umfasst vorzugsweise mindestens 0,5 Gew.-%, insbesondere 1 bis 30 Gew.-% und besonders bevorzugt 2 bis 15 Gew.-% Monomere zur Herstellung von Polyazolen.

Werden die Polyazole unmittelbar in der Polyphosphorsäure aus den Monomeren hergestellt, zeichnen sich die Polyazole durch ein hohes Molekulargewicht aus. Dies gilt insbesondere für die Polybenzimidazole. Gemessen als Intrinsische Viskosität liegt diese im Bereich von 0,3 bis 10 dl/g, vorzugsweise 1 bis 5 dl/g.

Insofern die Mischung gemäß Schritt A) auch Tricarbonsäuren bzw. Tetracarbonsäre enthält wird hierdurch eine Verzweigung/ Vernetzung des gebildeten Polymeren erzielt. Diese trägt zur Verbesserung der mechanischen Eigenschaft bei.

Gemäß einem weiteren Aspekt der vorliegenden Erfindung umfasst die in Schritt A) hergestellte Mischung Verbindungen, die unter Einwirkung von Wärme gemäß Schritt B) zur Bildung von Polyazolen geeignet sind, wobei diese Verbindungen durch Umsetzung von einem oder mehreren aromatischen und/oder heteroaromatischen Tetra-Amino-Verbindungen mit einer oder mehreren aromatischen und/oder heteroaromatischen Carbonsäuren bzw. deren Derivate, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 400°C, insbesondere bis zu 350°C, bevorzugt bis zu 280°C erhältlich sind. Die zur Herstellung dieser Präpolymere einzusetzenden Verbindungen wurden zuvor dargelegt.

Bei der in Schritt A) verwendeten Polyphosphorsäure handelt es sich um handelsübliche Polyphosphorsäuren wie diese beispielsweise von Riedel-de Haen erhältlich sind. Die Polyphosphorsäuren Hₙ₊₂PₙO₃ₙ₊₁ (n>1) besitzen üblicherweise einen Gehalt berechnet als P₂O₅ (acidimetrisch) von mindestens 83%. Anstelle einer Lösung der Monomeren kann auch eine Dispersion/Suspension erzeugt werden.

Erfindungsgemäß wird der in Schritt A) und/oder Schritt B) erzeugten Zusammensetzung mindestens ein weiteres Polymer zugesetzt, das kein Polyazol darstellt (Polymer (B). Diese Polymer kann unter anderem gelöst, dispergiert oder suspendiert vorliegen.

Hierbei liegt das Gewichtsverhältnis von Polyazol zu Polymer (B) im Bereich von 0,1 bis 50, vorzugsweise von 0,2 bis 20, besonders bevorzugt von 1 bis 10. Falls das Polyazol erst in Schritt B) gebildet wird, kann das Gewichtsverhältnis rechnerisch aus dem Gewicht der Monomeren zur Bildung des Polyazols erhalten werden, wobei die bei der Kondensation freigesetzten Verbindungen, beispielsweise Wasser zu berücksichtigen sind.

Zu den bevorzugten Polymeren gehören unter anderem Polyolefine, wie Poly(cloropren), Polyacetylen, Polyphenylen, Poly(p-xylylen), Polyarylmethylen, Polyarmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin, Polyvinylchlorid, Polyvinylidenchlorid, Polytetrafluorethylen, Polyhexafluorpropylen, Copolymere von PTFE mit Hexafluoropropylen, mit Perfluorpropylvinylether, mit Trifluoronitrosomethan, mit Sulfonylfluoridvinylether, mit Carbalkoxy-perfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, Cycloolefinische Copolymere, insbesondere aus Norbornen;
Polymere mit C-O-Bindungen in der Hauptkette, beispielsweise Polyacetal, Polyoxymethylen, Polyether, Polypropylenoxid, Polyepichlorhydrin, Polytetrahydrofuran, Polyphenylenoxid, Polyetherketon, Polyester, insbesondere Polyhydroxyessigsäure, Polyethylenterephthalat, Polybutylenterephthalat, Polyhydroxybenzoat, Polyhydroxypropionsäure, Polypivalolacton, Polycaprolacton, Polymalonsäure, Polycarbonat; Polymere C-S-Bindungen in der Hauptkette, beispielsweise Polysulfidether, Polyphenylensulfid, Polyethersulfon; Polymere C-N-Bindungen in der Hauptkette, beispielsweise Polyimine, Polyisocyanide,Polyetherimin, Polyanilin, Polyamide, Polyhydrazide, Polyurethane, Polyimide, Polyazole, Polyazine; Flüssigkristalline Polymere, insbesondere Vectra sowie
Anorganische Polymere, beispielsweise Polysilane, Polycarbosilane, Polysiloxane, Polykieselsäure, Polysilikate, Silicone, Polyphosphazene und Polythiazyl.

Des weiteren umfassen die Polymere (B) auch Polymere mit kovalent gebundenen Säuregruppen. Diese Säuregruppen umfassen insbesondere Sulfonsäuregruppen. Die mit Sulfonsäuregruppen modifizierten Polymere besitzen vorzugsweise einen Gehalt an Sulfonsäuregruppen im Bereich von 0,5 bis 3 meq/g. Dieser Wert wird über die sog. Ionenaustauschkapazität (IEC) bestimmt.

Zur Messung der IEC werden die Sulfonsäuregruppen in die freie Säure überführt. Hierzu wird das Polymere auf bekannte Weise mit Säure behandelt, wobei überschüssige Säure durch Waschen entfernt wird. So wird das sulfonierte Polymer zunächst 2 Stunden in siedendem Wasser behandelt. Anschliessend wird überschüssiges Wasser abgetupt und die Probe während 15 Stunden bei 160°C im Vakkumtrockenschrank bei p<1 mbar getrocknet. Dann wird das Trockengewicht der Membran bestimmt. Das so getrocknete Polymer wird dann in DMSO bei 80°C während 1h gelöst. Die Lösung wird anschliessend mit 0,1 M NaOH titriert. Aus dem Verbrauch der Säure bis zum Equivalentpunkt und dem Trockengewicht wird dann die Ionenaustauschkapazität (IEC) berechnet.

Derartige Polymere sind in der Fachwelt bekannt. So können Sulfonsäuregruppen enthaltende Polymere beispielsweise durch Sulfonierung von Polymeren hergestellt werden. Verfahren zur Sulfonierung von Polymeren sind in F. Kucera et. al. Polymer Engineering and Science1988, Vol. 38, No 5, 783-792 beschrieben. Hierbei können die Sulfonierungsbedingungen so gewählt werden, dass ein niedriger Sulfonierungsgrad entsteht (DE-A-19959289).

So wurde eine weitere Klasse nichtfluorierter Polymere durch Sulfonierung von hochtemperaturstabilen Thermoplasten entwickelt. So sind sulfonierte Polyetherketone (DE-A-4219077, WO96/01177), sulfonierte Polysulfone (J. Membr. Sci. 83 (1993) p.211) oder sulfoniertes Polyphenylensulfid (DE-A-19527435) bekannt.

US-A-6110616 beschreibt Copolymere aus Butadien und Styrol und deren anschliesende Sulfonierung zur Verwendung für Brennstoffzellen.

Des weiteren können derartige Polymere auch durch Polyreaktionen von Monomeren erhalten werden, die Säuregruppen umfassen. So können perfluorinierte Polymere wie in US-A-5422411 beschrieben durch Copolymerisation aus Trifluorostyrol und sulfonylmodifiziertem Trifuorostyrol hergestellt werden.

Zu diesen Perfluorosulfonsäurepolymeren gehört unter anderem Nafion^{®} (US-A-3692569). Dieses Polymer kann wie in US-A-4453991 beschrieben in Lösung gebracht und dann als lonomer eingesetzt werden.

Zu den bevorzugten Polymeren mit Säuregruppen gehören unter anderem sulfonierte Polyetherketone, sulfonierte Polysulfone, sulfonierte Polyphenylensulfide, perfluorinierte sulfonsäuregruppenhaltige Polymere, wie in US-A-3692569, US-A-5422411 und US-A-6110616 beschrieben.

Zur Anwendung in Brennstoffzellen mit einer Dauergebrauchstemperatur oberhalb 100°C werden solche Polymere (B) bevorzugt, die eine Glasübergangstemperatur oder Vicat-Erweichungstemperatur VST/A/50 von mindestens 100°C, bevorzugt mindestens 150°C und ganz besonders bevorzugt mindestens 180°C haben.

Hierbei sind Polysulfone mit einer Vicat-Erweichungstemperatur VST/A/50 von 180°C bis 230°C bevorzugt.

Darüber hinaus sind Polymere (B) bevorzugt, die eine geringe Löslichkeit und/oder Abbaubarkeit in Phosphorsäure aufweisen. Gemäß einer besonderen Ausführungsform der vorliegenden Erfindung ist nimmt das Gewicht durch eine Behandlung mit 85%iger Phosphorsäure nur unwesentlich ab. Vorzugsweise ist das Gewichtsverhältnis der Platte nach der Phosphorsäure-Behandlung zum Gewicht der Platte vor der Behandlung größer oder gleich 0,8, insbesondere größer oder gleich 0,9 und besonders bevorzugt größer oder gleich 0,95. Dieser Wert wird an einer Platte aus Polymer (B) gemessen, die 2 mm dick, 5 cm lang und 2 cm breit ist. Diese Platte wird in Phosphorsäure gegeben, wobei das Gewichtsverhältnis von Phosphorsäure zu Platte 10 beträgt. Anschließend wird die Phosphorsäure unter Rühren 24 Stunden auf 100°C erhitzt. Anschließend wird die Platte durch Waschen mit Wasser von überschüssiger Phosphorsäure befreit und getrocknet. Hiernach wird die Platte erneut gewogen.

Zu den bevorzugten Polymeren gehören Polysulfone, insbesondere Polysulfon mit Aromaten in der Hauptkette. Gemäß einem besonderen Aspekt der vorliegenden Erfindung weisen bevorzugte Polysulfone und Polyethersulfone eine Schmelzvolumenrate MVR 300/21,6 kleiner oder gleich 40 cm³/ 10 min, insbesondere kleiner oder gleich 30 cm³/ 10 min und besonders bevorzugt kleiner oder gleich 20 cm³/ 10 min gemessen nach ISO 1133 auf.

Die in Schritt A) erhaltene Mischung wird gemäß Schritt B) auf eine Temperatur von bis zu 400°C, insbesondere 350°C, vorzugsweise bis zu 280°C, insbesondere 100°C bis 250°C und besonders bevorzugt im Bereich von 200°C bis 250°C erhitzt. Hierbei wird ein Inertgas, beispielsweise Stickstoff oder ein Edelgas, wie Neon, Argon, eingesetzt.

Es hat sich weiterhin gezeigt, dass bei Verwendung von aromatischen Dicarbonsäuren (oder heteroaromatischen Dicarbonsäure) wie Isophthalsäure, Terephthalsäure, 2,5-Dihydroxyterephthalsäure, 4,6-Dihydroxyisophthalsäure, 2,6-Dihydroxyisophthalsäure, Diphensäure, 1,8-Dihydroxynaphthalin-3,6-Dicarbonsäure, Diphenylether-4,4'-Dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure, die Temperatur in Schritt B) im Bereich von bis zu 300°C, vorzugsweise zwischen 100°C und 250°C, günstig ist.

In einer Variante des Verfahrens kann die Erwärmung gemäß Schritt B) nach der Bildung eines flächigen Gebildes gemäß Schritt C) erfolgen.

Die in Schritt A) und/oder Schritt B) hergestellte Mischung kann zusätzlich noch organische Lösungsmittel enthalten. Diese können die Verarbeitbarkeit positiv beeinflussen. So kann beispielsweise die Rheologie der Lösung verbessert werden, so dass diese leichter extrudiert oder gerakelt werden kann.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann beispielsweise bei Schritt A), Schritt B) und/oder Schritt C) erfolgen. Des weiteren können diese Additive, falls diese in flüssiger Form vorliegen, auch nach der Polymerisation gemäß Schritt D) beigefügt werden.

Nicht limitierende Beispiele für Protonenleitende Füllstoffe sind
- Sulfate wie:: CsHSO₄, Fe(SO₄)₂, (NH₄)₃H(SO₄)₂, LiHSO₄, NaHSO₄, KHSO₄, RbSO₄, LiN₂H₅SO₄, NH₄HSO₄,
- Phosphate wie: Zr₃(PO₄)₄, Zr(HPO₄)₂, HZr₂(PO₄)₃, UO₂PO₄.3H₂O, H₈UO₂PO₄, Ce(HPO₄)₂, Ti(HPO₄)₂, KH₂PO₄, NaH₂PO₄, LiH₂PO₄, NH₄H₂PO₄, CsH₂PO₄, CaHPO₄, MgHPO₄, HSbP₂O₈, HSb₃P₂O₁₄, H₅Sb₅P₂O₂₀,
- Polysäure wie: H₃PW₁₂O₄₀.nH₂O (n=21-29), H₃SiW₁₂O₄₀.nH₂O (n=21-29), HₓWO₃, HSbWO₆, H₃PMo₁₂O₄₀, H₂Sb₄O₁₁, HTaWO₆, HNbO₃, HTiNbO₅, HTiTaO₅, HSbTeO₆, H₅Ti₄O₉, HSbO₃, H₂MoO₄
- Selenite und Arsenide wie: (NH₄)₃H(SeO₄)₂, UO₂AsO₄, (NH₄)₃H(SeO₄)₂, KH₂AsO₄, Cs₃H(SeO₄)₂, Rb₃H(SeO₄)₂,
- Phosphide wie: ZrP, TiP, HfP
- Oxide wie: Al₂O₃, Sb₂O₅, ThO₂, SnO₂, ZrO₂, MoO₃
- Silikate wie: Zeolithe, Zeolithe(NH₄+), Schichtsilikate, Gerüstsilikate, H-Natrolite, H-Mordenite, NH₄-Analcine, NH₄-Sodalite, NH₄-Gallate, H-Montmorillonite
- Säuren wie: HClO₄, SbF₅
- Füllstoffe wie: Carbide, insbesondere SiC, Si₃N₄, Fasern, insbesondere Glasfasern, Glaspulvern und/oder Polymerfasern, bevorzugt auf Basis von Polyazolen.

Diese Additive können in der protonen leitenden Polymermembran in üblichen Mengen enthalten sein, wobei jedoch die positiven Eigenschaften, wie hohe Leitfähigkeit, hohe Lebensdauer und hohe mechanische Stabilität der Membran durch Zugabe von zu großen Mengen an Additiven nicht allzu stark beeinträchtigt werden sollten. Im allgemeinen umfaßt die Membran nach der Behandlung gemäß Schritt D) höchstens 80 Gew.-%, vorzugsweise höchstens 50 Gew.-% und besonders bevorzugt höchstens 20 Gew.-% Additive.

Als weiteres kann diese Membran auch perfluorierte Sulfonsäure-Additive (vorzugsweise 0,1-20 Gew.-%, bevorzugt 0,2-15 Gew.-%, ganz bevorzugt 0,2-10 Gew.-%) enthalten. Diese Additive führen zur Leistungsverbesserung, in der Nähe der Kathode zur Erhöhung der Sauerstofflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.) Nicht limitierende Beispiele für persulfonierte Additive sind: Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Die Bildung des flächigen Gebildes gemäß Schritt C) erfolgt mittels an sich bekannter Maßnahmen (Gießen, Sprühen, Rakeln, Extrusion) die aus dem Stand der Technik zur Polymerfilm-Herstellung bekannt sind. Als Träger sind alle unter den Bedingungen als inert zu bezeichnenden Träger geeignet. Zu diesen Trägern gehören insbesondere Folien aus Polyethylenterephthalat (PET), Polytetrafluorethylen (PTFE), Polyhexafluorpropylen, Copolymere von PTFE mit Hexafluoropropylen, Polyimiden, Polyphenylensulfiden (PPS) und Polypropylen (PP).

Zur Einstellung der Viskosität kann die Lösung gegebenenfalls mit einem leicht verdampfbaren organischen Lösungsmittel versetzt werden. Hierdurch kann die Viskosität auf den gewünschten Wert eingestellt und die Bildung der Membran erleichtert werden.

Die Dicke des flächigen Gebildes gemäß Schritt C) beträgt vorzugsweise zwischen 10 und 4000 µm, vorzugsweise zwischen 15 und 3500 µm, insbesondere zwischen 20 und 3000 µm, besonders bevorzugt zwischen 30 und 1500µm und ganz besonders bevorzugt zwischen 50 und 1200 µm.

Die Behandlung der Membran in Schritt D) erfolgt insbesondere bei Temperaturen im Bereich von 0°C und 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf. Die Behandlung erfolgt vorzugsweise unter Normaldruck, kann aber auch unter Einwirkung von Druck erfolgen. Wesentlich ist, daß die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die partielle Hydrolyse der Polyphosphorsäure in Schritt D) führt zu einer Verfestigung der Membran und zu einer Abnahme der Schichtdicke und Ausbildung einer Membran. Die verfestigte Membran hat im allgemeinen eine Dicke zwischen 15 und 3000 µm, vorzugsweise 20 und 2000 µm, insbesondere zwischen 20 und 1500 µm, wobei die Membran selbsttragend ist.

Die obere Temperaturgrenze der Behandlung gemäß Schritt D) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt D) kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt D) erhaltene Membran kann selbsttragend ausgebildet werden, d.h. sie kann vom Träger ohne Beschädigung gelöst und anschließend gegebenenfalls direkt weiterverarbeitet werden.

Über den Grad der Hydrolyse, d.h. die Dauer, Temperatur und Umgebungsfeuchtigkeit, ist die Konzentration an Phosphorsäure und damit die Leitfähigkeit der erfindungsgemäßen Polymermembran einstellbar. Erfindungsgemäß wird die Konzentration der Phosphorsäure als Mol Säure pro Mol Wiederholungseinheit des Polymers angegeben. Im Rahmen der vorliegenden Erfindung ist eine Konzentration (Mol Phosporsäure bezogen auf eine Wiederholeinheit der Formel (III), d.h. Polybenzimidazol) zwischen 10 und 80, insbesondere zwischen 12 und 60, bevorzugt. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Im Anschluss an die Behandlung gemäß Schritt D) kann die Membran durch Einwirken von Hitze in Gegenwart von Sauerstoff noch vernetzt werden. Diese Härtung der Membran verbessert die Eigenschaften der Membran zusätzlich. Hierzu kann die Membran auf eine Temperatur von mindestens 150°C, vorzugsweise mindestens 200°C und besonders bevorzugt mindestens 250°C erwärmt werden. Die Sauerstoffkonzentration liegt bei diesem Verfahrensschritt üblich im Bereich von 5 bis 50 Vol.-%, vorzugsweise 10 bis 40 Vol.-%, ohne dass hierdurch eine Beschränkung erfolgen soll.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit ß-Strahlen. Die Strahlungsdosis beträgt hierbei zwischen 5 und 200 kGy.

Je nach gewünschtem Vernetzungsgrad kann die Dauer der Vernetzungsreaktion in einem weiten Bereich liegen. Im allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Die erfindungsgemäße Polymermembran weist verbesserte Materialeigenschaften gegenüber den bisher bekannten dotierten Polymermembranen auf. Insbesondere zeigen sie im Vergleich mit bekannten dotierten Polymermembranen bessere Leistungen. Diese begründet sich insbesondere durch eine verbesserte Protonenleitfähigkeit. Diese beträgt bei Temperaturen von 120°C mindestens 0,1 S/cm, vorzugsweise mindestens 0,11 S/cm, insbesondere mindestens 0,12 S/cm.

Falls die erfindungsgemäßen Membranen Polymere mit Sulfonsäuregruppen umfassen, zeigen die Membranen auch bei einer Temperatur von 70°C eine hohe Leitfähigkeit. Die Leitfähigkeit ist unter anderem abhängig vom Sulfonsäuregruppengehalt der Membran. Je höher dieser Anteil, desto besser die Leitfähigkeit bei tiefen Temperaturen. Hierbei kann eine erfindungsgemäße Membran bei geringen Temperaturen befeuchtet werden. Hierzu kann beispielsweise die als Energiequelle eingesetzte Verbindung, beispielsweise Wasserstoff, mit einem Anteil an Wasser versehen werden. In vielen Fällen genügt jedoch auch das durch die Reaktion gebildete Wasser, um eine Befeuchtung zu erzielen.

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten.

Gemäß einer besonderen Ausführungsform der vorliegenden Erfindung weisen die Membranen eine hohe mechanische Stabilität auf. Diese Größe ergibt sich aus der Härte der Membran, die mittels Mikrohärtemessung gemäss DIN 50539 bestimmt wird. Dazu wird die Membran mit einem Vickersdiamant innerhalb von 20 s sukzessive bis zu einer Kraft von 3 mN belastet und die Eindringtiefe bestimmt. Demnach beträgt die Härte bei Raumtemperatur mindestens 5 mN/mm², bevorzugt mindestens 50 mN/mm² und ganz besonders bevorzugt mindestens 200 mN/mm², ohne dass hierdurch eine Beschränkung erfolgen soll. In der Folge wird die Kraft während 5 s konstant bei 3 mN gehalten und das Kriechen aus der Eindringtiefe berechnet. Bei bevorzugten Membranen beträgt das Kriechen C_{HU} 0,003/20/5 unter diesen Bedingungen weniger als 30%, bevorzugt weniger als 15% und ganz besonders bevorzugt weniger als 5%. Der mittels Mikrohärtemessung bestimmte Modul beträgt YHU mindestens 0,1 MPa, insbesondere mindestens 2 MPa und ganz besonders bevorzugt mindestens 5 MPa, ohne dass hierdurch eine Beschränkung erfolgen soll.

Zu möglichen Einsatzgebieten der erfindungsgemäßen Polymermembranen gehören unter anderem die Verwendung in Brennstoffzellen, bei der Elektrolyse, in Kondensatoren und in Batteriesystemen.

Die vorliegenden Erfindung betrifft auch eine Membran-Elektroden-Einheit, die mindestens eine erfindungsgemäße Polymermembran aufweist. Für weitere Informationen über Membran-Elektroden-Einheiten wird auf die Fachliteratur, insbesondere auf die Patente US-A-4,191,618. US-A-4,212,714 und US-A-4,333,805 verwiesen.

In einer Variante der vorliegenden Erfindung kann die Membranbildung anstelle auf einem Träger auch direkt auf der Elektrode erfolgen. Die Behandlung gemäß Schritt D) kann hierdurch entsprechend verkürzt werden, da die Membran nicht mehr selbsttragend sein muß. Auch eine solche Membran ist Gegenstand der vorliegenden Erfindung.

Ein weiterer Gegenstand der vorliegenden Erfindung ist eine Elektrode mit einer protonenleitenden Polymerbeschichtung gemäß Anspruch 1.

Der Vollständigkeit halber sei festgehalten, dass sämtliche bevorzugten Ausführungsformen einer selbsttragenden Membran entsprechend auch für eine unmittelbar auf die Elektrode aufgebrachte Membran gelten.

Gemäß einem besonderen Aspekt der vorliegenden Erfindung hat die Beschichtung eine Dicke zwischen 2 und 3000 µm, vorzugsweise zwischen 2 und 2000 µm, insbesondere zwischen 3 und 1500 µm, besonders bevorzugt 5 bis 500 µm und ganz besonders bevorzugt zwischen 10 bis 200µm, ohne dass hierdurch eine Beschränkung erfolgen soll.

Die Behandlung gemäß Schritt D) führt zu einer Härtung der Beschichtung. Hierbei erfolgt die Behandlung solange, bis die Beschichtung eine genügende Härte aufweist, um zu einer Membran-Elektroden-Einheit verpresst werden zu können. Eine genügende Härte ist gegeben, wenn eine entsprechend behandelte Membran selbsttragend ist. In vielen Fällen genügt jedoch eine geringere Härte. Die gemäß DIN 50539 (Mikrohärtemessung) bestimmte Härte beträgt im allgemeinen mindestens 1 mN/mm², bevorzugt mindestens 5 mN/mm² und ganz besonders bevorzugt mindestens 50 mN/mm², ohne dass hierdurch eine Beschränkung erfolgen soll.

Eine derartig beschichtete Elektrode kann in einer Membran-Elektroden-Einheit, die gegebenenfalls mindestens eine erfindungsgemäße Polymermembran aufweist, eingebaut werden.

In einer weiteren Variante kann auf die erfindungsgemäße Membran eine katalytisch aktive Schicht aufgebracht werden und diese mit einer Gasdiffusionslage verbunden werden. Hierzu wird gemäß den Schritten A) bis D) eine Membran gebildet und der Katalysator aufgebracht. Auch diese Gebilde sind Gegenstand der vorliegenden Erfindung.

Darüber hinaus kann die Bildung der Membran gemäß den Schritten A) bis D) auch auf einem Träger oder einer Trägerfolie erfolgen, die bereits den Katalysator aufweist. Nach Entfernen des Trägers bzw. der Trägerfolie befindet sich der Katalysator auf der erfindungsgemäßen Membran. Auch diese Gebilde sind Gegenstand der vorliegenden Erfindung.

Ebenfalls Gegenstand der vorliegenden Erfindung ist eine Membran-Elektroden-Einheit, die mindestens eine beschichtete Elektrode und/oder mindestens eine erfindungsgemäße Polymermembran in Kombination mit einer weiteren Polymermembran auf Basis von Polyazolen oder einer Polymerblendmembran enthaltend mindestens ein Polymer auf Basis von Polyazolen aufweist.

### Beispiel

### Herstellung p-PBI-Lösung

Terephthalsäure (12.4598 g, 0.075mol) and 3,3'-4,4'-Tetraaminobiphenyl (16.074g, 0.075mol,) wurden in einem Dreihalskolben unter N₂ in 650 g Polyphosphorsäure (PPA) vorgelegt. Die Reaktionsmischung wurde unter Rühren bei 220 °C 24h lang polymerisiert.

Ein Teil der Lösung wurde in H₂O ausgefallen, mit Ammoniumhydroxid und Wasser gewaschen. Anschließend wurde das Polymer unter Vakuum bei 100°C 24 h lang getrocknet. Die inhärente Viskosität von p-PBI beträgt 2,9 g/dL bei Polymerlösungskonzentration von 0.2 g/dL in konz. Schwefelsäure.

### s-PEK

Polyetherketon (PEK) (Mw: 144100, Mn: 55000) wurde in Schwefelsäure gelöst und durch Zugabe von Oleum bei 50°C sulfoniert. Die Reaktionsmischung wurde in Wasser ausgefallen, neutralisiert, filtriert und bei 100°C in Vakuum 24h lang getrocknet. Sulfonierungsgrad des s-PEK beträgt 57.3%.

### Blenden und Membranherstellung

p-PBI/PPA wurde unter N₂ Atmosphäre auf 150°C erwärmt. 94.22 g p-PBI/PPA Lösung wurde in einem Dreihalskolben vorgelegt und 16.0 g s-PEK und 95 g PPA zur p-PBI/PPA Lösung gegeben. Die Blendlösung wurde 20 h lang bei 150°C unter N₂-Atmosphäre gerührt. Die Lösung wurde anschließend bei erhöhter Temperatur auf einer Glasplatte gerakelt und hydrolysiert.

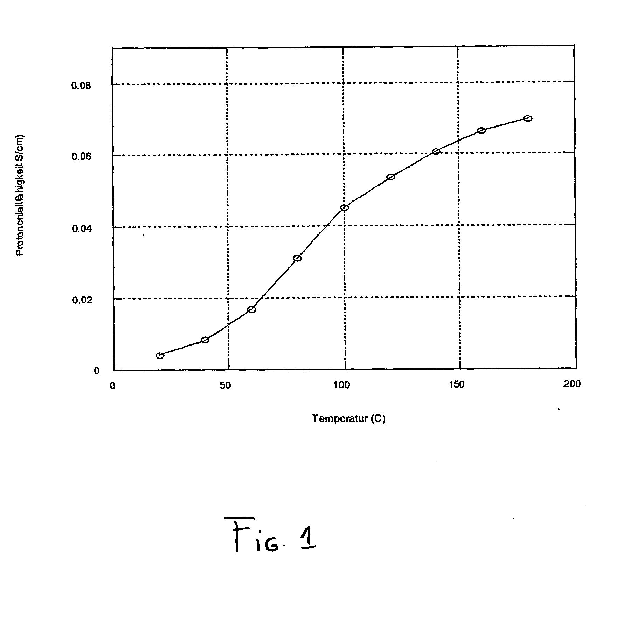

Die Leitfähigkeit der so hergestellten Membran wurde bei verschiedenen Temperaturen bestimmt, wobei die erhaltenen Daten in Abbildung 1 dargelegt sind.

## Patentansprüche

1. Protonenleitende Polymermembran enthaltend Polyazolblends erhältlich durch ein Verfahren umfassend die Schritte
A) Herstellung einer Mischung umfassend
Polyphosphorsäure,
mindestens ein Polyazol (Polymer A) und/oder mindestens ein oder mehrere Verbindungen, die unter Einwirkung von Wärme gemäß Schritt B) zur Bildung von Polyazolen geeignet sind,
B) Erwärmen der Mischung erhältlich gemäß Schritt A) unter Inertgas auf Temperaturen von bis zu 400°C,
C) Aufbringen einer Schicht unter Verwendung der Mischung gemäß Schritt A) und/oder B) auf einem Träger,
D) partielle Hydrolyse der Polyphosphorsäure die in der gemäß Schritt C) gebildeten Membran vorliegt durch Gegenwart von Feuchtigkeit bei Temperaturen und für eine Dauer ausreichend bis diese selbsttragend ist,
wobei der gemäß Schritt A) und/oder Schritt B) erhältlichen Zusammensetzung mindestens ein weiteres Polymer (Polymer B), das kein Polyazol darstellt, zugefügt wird, wobei das Gewichtsverhältnis von Polyazol zu Polymer B im Bereich von 0,1 bis 50 liegt und die Polymermembran eine Protonenleitfähigkeit von mindestens 0,1 S/cm bei 120°C aufweist.

2. Membran gemäß Anspruch 1, **dadurch gekennzeichnet, dass** die in Schritt A) hergestellte Mischung Verbindungen umfasst, die unter Einwirkung von Wärme gemäß Schritt B) zur Bildung von Polyazolen geeignet sind, wobei diese Verbindungen ein oder mehreren aromatische und/oder heteroaromatische Tetra-Amino-Verbindungen und eine oder mehrere aromatische und/oder heteroaromatische Carbonsäuren oder deren Derivate, die mindestens zwei Säuregruppen pro Carbonsäure-Monomer umfassen, und/oder eine oder mehrere aromatischen und/oder heteroaromatischen Diaminocarbonsäuren umfassen.

3. Membran gemäß Anspruch 1, **dadurch gekennzeichnet, dass** die in Schritt A) hergestellte Mischung Verbindungen umfasst, die unter Einwirkung von Wärme gemäß Schritt B) zur Bildung von Polyazolen geeignet sind, wobei diese Verbindungen durch Umsetzung von einem oder mehreren aromatischen und/oder heteroaromatischen Tetra-Amino-Verbindungen mit einer oder mehreren aromatischen und/oder heteroaromatischen Carbonsäuren bzw. deren Derivate, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 400°C erhältlich sind.

4. Membran gemäß Anspruch 2 oder 3, **dadurch gekennzeichnet, dass** die zur Bildung von Polyazolen geeigneten Verbindungen als aromatische und/oder heteroaromatische Tetra-Aminoverbindung Verbindungen umfassen, die ausgewählt sind aus der Gruppe bestehend aus 3,3',4,4'-Tetraaminobiphenyl, 2,3,5,6-Tetraaminopyridin und/oder 1,2,4,5-Tetraaminobenzol.

5. Membran gemäß Anspruch 2, 3 oder 4, **dadurch gekennzeichnet, dass** die zur Bildung von Polyazolen geeigneten Verbindungen als aromatische und/oder heteroaromatische Carbonsäuren oder deren Derivate, die mindestens zwei Säuregruppen pro Carbonsäure-Monomer enthalten, Verbindungen umfassen die ausgewählt sind aus der Gruppe bestehend aus Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,5-Dihydroxyisophthalsäure, 2,3-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

6. Membran gemäß Anspruch 2, 3, 4 oder 5, **dadurch gekennzeichnet, dass** die zur Bildung von Polyazolen geeigneten Verbindungen aromatische Tricarbonsäuren, deren C1-C20-Alkyl-Ester oder C5-C12-Aryl-Ester oder deren Säureanhydride oder deren Säurehalogenide oder Tetracarbonsäuren, deren C1-C20-Alkyl-Ester oder C5-C12-Aryl-Ester oder deren Säureanhydride oder deren Säurehalogenide umfassen.

7. Membran gemäß Anspruch 6, **dadurch gekennzeichnet, dass** die aromatische Tricarbonsäuren Verbindungen umfassen, die ausgewählt sind aus der Gruppe bestehend aus 1,3,5-Benzoltricarbonsäure (trimesic acid); 2,4,5-Benzoltricarbonsäure (trimellitic acid); (2-Carboxyphenyl)iminodiessigsäure, 3,5,3'-Biphenyltricarbonsäure; 3,5,4'-Biphenyltricarbonsäure 2,4,6-Pyridintricarbonsäure, Benzol-1,2,4,5-tetracarbonsäuren; Naphthalin-1,4,5,8-tetracarbonsäuren, 3,5,3',5'-Biphenyltetracarbonsäuren, Benzophenontetracarbonsäure, 3,3',4,4'-Biphenyltetracarbonsäure, 2,2',3,3'-Biphenyltetracarbonsäure, 1,2,5,6-Naphthalintetracarbonsäure und/oder 1,4,5,8-Naphthalintetracarbonsäure.

8. Membran gemäß Anspruch 6 oder 7, **dadurch gekennzeichnet, dass** der Gehalt an Tricarbonsäure und/oder Tetracarbonsäuren zwischen 0 und 30 Mol-%, vorzugsweise 0,1 und 20 Mol-%, insbesondere 0,5 und 10 Mol-%, bezogen auf eingesetzte Dicarbonsäure, beträgt.

9. Membran gemäß einem oder mehreren der Ansprüche 2 bis 8, **dadurch gekennzeichnet, dass** die zur Bildung von Polyazolen geeigneten Verbindungen heteroaromatische Dicarbonsäuren, Tricarbonsäuren und/oder Tetracarbonsäuren umfassen, welche mindestens ein Stickstoff, Sauerstoff, Schwefel oder Phosphoratom im Aromaten enthalten.

10. Membran gemäß Anspruch 9, **dadurch gekennzeichnet, dass** Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure, 2,4,6-Pyridintricarbonsäure, Benzimidazol-5,6-dicarbonsäure, sowie deren C1-C20-Alkyl-Ester oder C5-C12-Aryl-Ester, oder deren Säureanhydride oder deren Säurechloride eingesetzt werden.

11. Membran gemäß Anspruch 2 oder 3, **dadurch gekennzeichnet, dass** die zur Bildung von Polyazolen geeigneten Verbindungen Diaminobenzoesäure und/oder deren Mono- und Dihydrochloridderivate umfassen.

12. Membran gemäß Anspruch 1, **dadurch gekennzeichnet, dass** das Polymer B) in Schritt A) in einer Menge im Bereich von 10 bis 50 Gew.-%, bezogen auf das Gewicht der Mischung A) und/oder B), eingesetzt wird.

13. Membran gemäß Anspruch 1, **dadurch gekennzeichnet, dass** das Polymer B) mindestens ein Polyolefin umfasst.

14. Membran gemäß Anspruch 1, **dadurch gekennzeichnet, dass** das Polymer B) mindestens ein Polymer C-O-Bindungen umfasst.

15. Membran gemäß Anspruch 1, **dadurch gekennzeichnet, dass** das Polymer B) mindestens ein Polymer mit C-S-Bindungen umfasst.

16. Membran gemäß Anspruch 1, **dadurch gekennzeichnet, dass** das Polymer B) mindestens ein Polymer mit C-N-Bindungen umfasst.

17. Membran gemäß Anspruch 1, **dadurch gekennzeichnet, dass** das Polymer B) mindestens ein anorganisches Polymer umfasst.

18. Membran gemäß Anspruch 1, **dadurch gekennzeichnet, dass** das Polymer B) mindestens ein sulfoniertes Polymer umfasst.

19. Membran gemäß einem oder mehreren der vorhergehenden Ansprüche, **dadurch gekennzeichnet, dass** die Erwärmung gemäß Schritt B) nach der Bildung eines flächigen Gebildes gemäß Schritt C) erfolgt

20. Membran gemäß Anspruch 1, **dadurch gekennzeichnet, dass** die Behandlung gemäß Schritt D) bei Temperaturen im Bereich von 0°C und 150°C in Gegenwart von Feuchtigkeit erfolgt.

21. Membran gemäß Anspruch 1, **dadurch gekennzeichnet, dass** die Behandlung der Membran in Schritt D) zwischen 10 Sekunden und 300 Stunden beträgt.

22. Membran gemäß Anspruch 1, **dadurch gekennzeichnet, dass** die nach Schritt D) gebildete Membran durch Einwirkung von Sauerstoff vernetzt wird.

23. Membran gemäß Anspruch 1, **dadurch gekennzeichnet, dass** in Schritt C) eine Schicht mit einer Dicke von 20 und 4000 µm erzeugt wird.

24. Membran gemäß Anspruch 1, **dadurch gekennzeichnet, dass** die nach Schritt D) gebildete Membran eine Dicke zwischen 15 und 3000 µm hat.

25. Elektrode mit einer protonenleitenden Polymerbeschichtung gemäß Anspruch 1.

26. Elektrode gemäß Anspruch 24, wobei die Beschichtung eine Dicke zwischen 2 und 3000 µm hat.

27. Membran-Elektroden-Einheit enthaltend mindestens eine Elektrode und mindestens eine Membran gemäß einem oder mehreren der Ansprüche 1 bis 24.

28. Membran-Elektroden-Einheit enthaltend mindestens eine Elektrode gemäß Anspruch 25 oder 26 und mindestens eine Membran gemäß einem oder mehreren der Ansprüche 1 bis 24.

29. Brennstoffzelle enthaltend eine oder mehrere Membran-Elektroden-Einheiten gemäß Anspruch 27 oder 28.

## Claims

1. A proton-conducting polymer membrane containing polyazole blends and obtainable by a process comprising the steps of
A) preparation of a mixture comprising polyphosphoric acid, at least one polyazole (polymer A) and/or one or more compounds which are suitable for forming polyazoles under the action of heat according to step B),
B) heating of the mixture obtainable according to step A) under inert gas to temperatures of up to 400°C,
C) application of a layer using the mixture according to step A) and/or B) to a support,
D) partial hydrolysis of the polyphosphoric acid as is available in the membrane formed in step C) in the presence of moisture at temperatures and for a sufficient duration, until it is self-supporting,
wherein at least one further polymer (polymer B) which is not a polyazole is added to the composition obtainable according to step A) and/or step B) and the weight ratio of polyazole to polymer B is in the range of 0.1 to 50 and the polymer membrane has a proton conductivity of at least 0.1 S/cm at 120°C.

2. The membrane according to claim 1, **characterized in that** the mixture prepared in step A) comprises compounds which are suitable for forming polyazoles under the action of heat according to step B), with these compounds comprising one or more aromatic and/or heteroaromatic tetraamino compounds and one or more aromatic and/or heteroaromatic carboxylic acids or derivatives thereof which have at least two acid groups per carboxylic acid monomer, and/or one or more aromatic and/or heteroaromatic diaminocarboxylic acids.

3. The membrane according to claim 1, **characterized in that** the mixture prepared in step A) comprises compounds which are suitable for forming polyazoles under the action of heat in step B), wherein these compounds are obtainable by reaction of one or more aromatic and/or heteroaromatic tetraamino compounds with one or more aromatic and/or heteroaromatic carboxylic acids or derivatives thereof, which contain at least two acid groups per carboxylic acid monomer or of one or more aromatic and/or heteroaromatic diaminocarboxylic acids in the melt at temperatures of up to 400°C.

4. The membrane according to claim 2 or 3, **characterized in that** the compounds suitable for forming polyazoles as aromatic and/or heteroaromatic tetraamino compounds comprise compounds selected from the group consisting of 3,3',4,4'-tetraaminobiphenyl, 2,3,5,6-tetraaminopyridine and 1,2,4,5-tetraaminobenzene.

5. The membrane according to claim 2, 3 or 4, **characterized in that** the compounds suitable for forming polyazoles as aromatic and/or heteroaromatic carboxylic acids or their derivatives, which contain at least two acid groups per carboxylic acid monomer, comprise compounds which are selected from the group consisting of isophthalic acid, terephthalic acid, phthalic acid, 5-hydroxyisophthalic acid, 4-hydroxyisophthalic acid, 2-hydroxyterephthalic acid, 5-aminoisophthalic acid, 5-N,N-dimethylaminoisophthalic acid, 5-N,N-diethylaminoisophthalic acid, 2,5-dihydroxyterephthalic acid, 2,5-dihydroxyisophthalic acid, 2,3-dihydroxyisophthalic acid, 2,3-dihydroxyphthalic acid, 2,4-dihydroxyphthalic acid, 3,4-dihydroxyphthalic acid, 3-fluorophthalic acid, 5-fluoroisophthalic acid, 2-fluoroterephthalic acid, tetrafluorophthalic acid, tetrafluoroisophthalic acid, tetrafluoroterephthalic acid,1,4-naphthalenedicarboxylic acid, 1,5-naphthalenedicarboxylic acid, 2,6-naphthalenedicarboxylic acid, 2,7-naphthalenedicarboxylic acid, diphenic acid, 1,8-dihydroxynaphthalene-3,6-dicarboxylic acid, diphenyl ether-4,4'-dicarboxylic acid, benzophenone-4,4'-dicarboxylic acid, diphenylsulphone-4,4'-dicarboxylic acid, biphenyl-4,4'-dicarboxylic acid, 4-trifluoromethylphthalic acid, 2,2-bis-(4-carboxyphenyl)hexafluoropropane, 4,4'-stilbenedicarboxylic acid, 4-carboxycinnamic acid or their C1-C20 alkyl esters or C5-C12 aryl esters or their acid anhydrides or their acid chlorides.

6. The membrane according to claim 2, 3, 4 or 5, **characterized in that** the compounds suitable for forming polyazoles comprise aromatic tricarboxylic acids, their C1-C20-alkyl esters or C5-C12-aryl esters or their acid anhydrides or their acid halides or tetracarboxylic acids, their C1-C20-alkyl esters or C5-C12-aryl esters or their acid anhydrides or their acid halides.

7. The membrane according to claim 6, **characterized in that** the aromatic tricarboxylic acids comprise compounds which are selected from the group consisting of 1,3,5-benzenetricarboxylic acid (trimesic acid); 2,4,5-benzenetricarboxylic acid (trimellitic acid); (2-carboxyphenyl)iminodiacetic acid, 3,5,3'-biphenyltricarboxylic acid; 3,5,4'-biphenyltricarboxylic acid; 2,4,6-pyridinetricarboxylic acid, benzene-1,2,4,5-tetracarboxylic acids; naphthalene-1,4,5,8-tetracarboxylic acids, 3,5,3',5'-biphenyltetracarboxylic acids, benzophenonetetracarboxylic acid, 3,3',4,4'-biphenyltetracarboxylic acid, 2,2',3,3'-biphenyltetracarboxylic acid, 1,2,5,6-naphthalenetetracarboxylic acid and/or 1,4,5,8-naphthalenetetracarboxylic acid.

8. The membrane according to claim 6 or 7, **characterized in that** the content of tricarboxylic acid and/or tetracarboxylic acids is from 0 to 30 mol%, preferably 0.1 to 20 mol%, in particular from 0.5 to 10 mol%, based on dicarboxylic acid used.

9. The membrane according to one or more of claims 2 to 8, **characterized in that** the compounds suitable for forming polyazoles comprise heteroaromatic dicarboxylic acids, tricarboxylic acids and/or tetracarboxylic acids, which contain at least one nitrogen, oxygen, sulfur or phosphorus atom in the aromatics.

10. The membrane according to claim 9, **characterized in that** pyridine-2,5-dicarboxylic acid, pyridine-3,5-dicarboxylic acid, pyridine-2,6-dicarboxylic acid, pyridine-2,4-dicarboxylic acid, 4-phenyl-2,5-pyridinedicarboxylic acid, 3,5-pyrazoledicarboxylic acid, 2,6-pyrimidinedicarboxylic acid, 2,5-pyrazinedicarboxylic acid, 2,4,6-pyridinetricarboxylic acid, benzimidazole-5,6-dicarboxylic acid as well as their C1-C20 alkyl esters or C5-C12 aryl esters or their acid anhydrides or their acid chlorides are used.

11. The membrane according to claim 2 or 3, **characterized in that** the compounds suitable for forming polyazoles comprise diaminobenzoic acid and/or its monohydrochloride and dihydrochloride derivatives.

12. The membrane according to claim 1, **characterized in that** the polymer B) is used in step A) in an amount in the range of 10 to 50% by weight, based on the weight of the mixture A) and/or B).

13. The membrane according to claim 1, **characterized in that** the polymer B) comprises at least one polyolefin.

14. The membrane according to claim 1, **characterized in that** the polymer B) comprises at least one polymer having C-O bonds.

15. The membrane according to claim 1, **characterized in that** the polymer B) comprises at least one polymer having C-S bonds.

16. The membrane according to claim 1, **characterized in that** the polymer B) comprises at least one polymer having C-N bonds.

17. The membrane according to claim 1, **characterized in that** the polymer B) comprises at least one inorganic polymer.

18. The membrane according to claim 1, **characterized in that** the polymer B) comprises at least one sulfonated polymer.

19. The membrane according to one or more of the preceding claims, **characterized in that** the heating according to step B) is carried out after formation of a planar structure according to step C).

20. The membrane according to claim 1, **characterized in that** the treatment according to step D) is carried out at temperatures in the range from 0°C to 150°C in the presence of moisture.

21. The membrane according to claim 1, **characterized in that** the treatment of the membrane in step D) is carried out for from 10 seconds to 300 hours.

22. The membrane according to claim 1, **characterized in that** the membrane formed after step D) is cross-linked by action of oxygen.

23. The membrane according to claim 1, **characterized in that** a layer having a thickness of from 20 to 4000 µm is produced in step C).

24. The membrane according to claim 1, **characterized in that** the membrane formed after step D) has a thickness of from 15 to 3000 µm.

25. An electrode with a proton-conducting polymer coating according to claim 1.

26. The electrode according to claim 24, wherein the coating has a thickness of from 2 to 3000 µm.

27. A membrane electrode unit containing at least one electrode and at least one membrane according to one or more of claims 1 to 24.

28. The membrane electrode unit containing at least one electrode according to claim 25 or claim 26 and at least one membrane according to one or more of claims 1 to 24.

29. A fuel cell containing one or more membrane electrode units according to claim 27 or claim 28.

## Revendications

1. Membrane de polymère conductrice de protons contenant des mélanges de polyazoles obtenus à l'aide d'un processus comprenant les étapes
A) Fabrication d'un mélange comprenant de l'acide polyphosphorique, au moins un polyazole (polymère A) ou au moins un ou plusieurs composés qui se prêtent à la formation de polyazoles sous l'influence de la chaleur d'après l'étape B),
B) Réchauffement du mélange obtenu à l'étape A) sous gaz inerte à une température pouvant atteindre 400 °C,
C) Application d'une couche du mélange obtenu à l'étape A) ou B) sur un support,
D) Hydrolyse partielle de l'acide polyphosphorique présent dans la membrane formée à l'étape C) en présence d'humidité, ainsi qu'à une température et pour une durée suffisantes pour que la membrane devienne autoporteuse, au moins un autre polymère qui ne représente pas un polyazole étant ajouté à la composition obtenue à l'étape A) ou B), le rapport pondéral du polyazole au polymère B se situant entre 0,1 et 50 et la membrane de polymère présentant une conductibilité de protons d'au moins 0,1 S/cm à 120°C.

2. Membrane selon la revendication 1, **caractérisée en ce que** le mélange fabriquée à l'étape A) comprend des composés qui se prêtent à la formation de polyazoles sous l'influence de la chaleur d'après l'étape B), ces composés comprenant un ou plusieurs composés de tétramine aromatiques ou hétéroaromatiques et un ou plusieurs acides carboxyliques aromatiques ou hétéroaromatiques, ou leurs dérivés qui comprennent au moins deux groupes d'acide par monomère d'acide carboxylique, ou un ou plusieurs acides diaminocarboxyliques aromatiques ou hétéroaromatiques.

3. Membrane selon la revendication 1, **caractérisée en ce que** le mélange fabriquée à l'étape A) comprend des composés qui se prêtent à la formation de polyazoles sous l'influence de la chaleur d'après l'étape B), ces composés étant obtenus par la réaction d'un ou plusieurs composés de tétramine aromatiques ou hétéroaromatiques avec un ou plusieurs acides carboxyliques aromatiques ou hétéroaromatiques, ou leurs dérivés qui comprennent au moins deux groupes d'acide par monomère d'acide carboxylique, ou d'un ou plusieurs acides diaminocarboxyliques aromatiques ou hétéroaromatiques dans la fusion à des températures pouvant atteindre 400 °C.

4. Membrane selon les revendications 2 ou 3, **caractérisée en ce que** les composés qui se prêtent à la formation de polyazoles comprennent, en tant que composés de tétramine aromatiques ou hétéroaromatiques, des composés sélectionnés parmi le groupe composé de tétraminobiphényle 3,3',4,4', tétraminopyridine 2,3,5,6 ou tétraminobenzole 1,2,4,5.

5. Membrane selon les revendications 2, 3 ou 4, **caractérisée en ce que** les composés qui se prêtent à la formation de polyazoles comprennent, en tant qu'acides carboxyliques aromatiques ou hétéroaromatiques qui contiennent au moins deux groupes d'acide par monomère d'acide carboxylique, des composés sélectionnés parmi le groupe composé de d'acide isophtalique, acide téréphtalique, acide phtalique, 5-acide hydroxyisophtalique, 4-acide hydroxyisophtalique, 2-acide hydroxytéréphtalique, 5-acide aminoisophtalique, 5-N,N-acide diméthylaminoisophtalique, 5-N,N- acide diéthylaminoisophtalique, 2,5-acide dihydroxytéréphtalique, 2,5-acide dihydroxyisophtalique, 2,3-acide dihydroxyisophtalique, 2,3-acide dihydroxyphtalique, 2,4-acide dihydroxyphtalique, 3,4-acide dihydroxyphtalique, 3-acide fluorophtalique, 5-acide fluoroisophtalique, 2-acide fluorotéréphtalique, acide tétrafluorophtalique, acide tétrafluoroisophtalique, acide tétrafluorotéréphtalique, 1,4-acide naphtalène-dicarboxylique, 1,5-acide naphtalène-dicarboxylique, 2,6-acide naphtalène-dicarboxylique, 2,7 - acide naphtalène-dicarboxylique, 2,6- acide naphtalène-dicarboxylique, 2,7- acide naphtalène-dicarboxylique, acide diphénique, 1,8-acide dihydroxynaphtalène-3,6-dicarboxylique, acide diphényléther-4,4'-dicarboxylique, acide benzophénone-4,4'-dicarboxylique, acide diphénylsulfone-4,4'-dicarboxylique, acide biphényle-4,4'-dicarboxylique, 4-acide trifluorométhylphtalique, 2,2-Bis(4-carboxyphényle)hexafluoropropane, 4,4'-acide stilbendicarboxylique, 4-acide carboxycinnamique, ou leur alkyle ester C1-C20 ou alkyle ester C5-C12 ou leur anhydride d'acide ou leur chlorure d'acide.

6. Membrane selon les revendications 2, 3, 4 ou 5, **caractérisée en ce que** les composés qui se prêtent à la formation de polyazoles comprennent des acides tricarboxyliques, leur alkyle ester C1-C20 ou aryl ester C5-C12 ou leur anhydride d'acide ou leur halogénure d'acide ou acides tétracarboxyliques, leur alkyle ester C1-C20 ou aryl ester C5-C12 ou leurs anhydride d'acide ou leurs halogénures d'acide.

7. Membrane selon la revendication 6, **caractérisée en ce que** les acides tricarboxyliques aromatiques comprennent des composés sélectionnés parmi le groupe composé d'acide benzène-1,3,5-tricarboxylique (acide trimésique); acide benzène-2,4,5-tricarboxylique (acide trimellitique); (2-Carboxyphényle)acide iminodiacétique, acide biphényle-3,5,3'-tricarboxylique ; acide biphényle-3,5,4'-tricarboxylique, acide pyridine-2,4,6-tricarboxylique, acide benzène-1,2,4,5-tétracarboxylique ; acides naphtalène-1,4,5,8-tétracarboxylique, acides biphényle-3,5,3',5'-tétracarboxylique, acide benzophénone tétracarboxylique, acide biphényle-3,3',4,4'-tétracarboxylique, acide biphényle-2,2',3,3'-tétracarboxylique, acide naphtalène-1,2,5,6-tétracarboxylique ou acide naphtalène-1 ,4,5,8-tétracarboxylique.

8. Membrane selon les revendications 6 ou 7, **caractérisée en ce que** la teneur en acide tricarboxylique ou acides tétracarboxylique se situe entre 0 et 30 % molaire, préférablement 0,1 et 20 % molaire, surtout 0,5 et 10 % molaire, par rapport à l'acide dicarboxylique ajouté.

9. Membrane selon une ou plusieurs des revendications 2 à 8, **caractérisée en ce que** les composés qui se prêtent à la formation de polyazoles comprennent des acides dicarboxyliques, acides tricarboxyliques ou acides tétracarboxyliques dont la combinaison aromatique contient au moins un atome d'azote, oxygène, souffre ou phosphore.

10. Membrane selon la revendication 9, **caractérisée en ce que** l'acide pyridine-2,5-dicarboxylique, acide pyridine-3,5-dicarboxylique, acide pyridine-2,6-dicarboxylique, acide pyridine-2,4-dicarboxylique, acide-4-phényle-2,5-pyridine dicarboxylique, acide pyrazole-dicarboxylique, acide pyrimidine-2,6-dicarboxylique, acide benzimidazole-2,6-dicarboxylique, ainsi que leur alkyle ester C1-C20 ou alkyle ester C5-C12, ou leur anhydride d'acide ou leur chlorure d'acide.

11. Membrane selon les revendications 10 ou 11, **caractérisée en ce que** les composés qui se prêtent à la formation de polyazoles comprennent de l'acide diaminobenzoïque ou ses dérivés de mono ou dihydrochlorure.

12. Membrane selon la revendication 1, **caractérisée en ce que** le polymère B) est appliqué à l'étape A) dans une quantité de l'ordre de 10 à 50 % de poids par rapport au poids du mélange en A) et B).

13. Membrane selon la revendication 1, **caractérisée en ce que** le polymère B) comprend au moins une polyoléfine.

14. Membrane selon la revendication 1, **caractérisée en ce que** le polymère B) comprend au moins un polymère avec liaisons C-O.

15. Membrane selon la revendication 1, **caractérisée en ce que** le polymère B) comprend au moins un polymère avec liaisons C-S.

16. Membrane selon la revendication 1, **caractérisée en ce que** le polymère B) comprend au moins un polymère avec liaisons C-N.

17. Membrane selon la revendication 1, **caractérisée en ce que** le polymère B) comprend au moins un polymère inorganique.

18. Membrane selon la revendication 1, **caractérisée en ce que** le polymère B) comprend au moins un polymère sulfoné.

19. Membrane selon l'une des revendications précédentes, **caractérisée en ce que** le réchauffement d'après l'étape B) est effectué après la formation d'une membrane étendue selon l'étape C).

20. Membrane selon la revendication 1, **caractérisée en ce que** le traitement selon l'étape D) à des températures entre 0 °C et 150 °C est effectué en présence d'humidité.

21. Membrane selon une ou plusieurs des revendications précédentes, **caractérisée en ce que** le traitement de la membrane à l'étape D) dure entre 10 et 300 secondes.

22. Membrane selon une ou plusieurs des revendications précédentes, **caractérisée en ce que** la membrane formée d'après l'étape D) est réticulée sous l'effet de l'oxygène.

23. Membrane selon une ou plusieurs des revendications précédentes, **caractérisé en ce qu'**une couche d'une épaisseur de 20 et 4000 µm est obtenue à l'étape C).

24. Membrane selon une ou plusieurs des revendications précédentes, **caractérisée en ce que** la membrane formée d'après l'étape D) a une épaisseur d'entre 15 et 3000 µm.

25. Électrode avec une couche de polymère conductrice de proton selon la revendication 1.

26. Électrode selon la revendication 24, la couche étant dotée d'une épaisseur entre 2 et 3000 µm.

27. Unité membrane-électrodes comprenant au moins une électrode et au moins une membrane selon une ou plusieurs des revendications 1 à 24.

28. Unité membrane-électrodes comprenant au moins une électrode selon les revendications 25 ou 26 et au moins une membrane selon une ou plusieurs des revendications 1 à 24.

29. Pile à combustible contenant une ou plusieurs unités membrane-électrodes selon les revendications 27 ou 28.
